# EUROPEAN PATENT SPECIFICATION

(11) **EP 4 353 630 B1**
(45) Date of publication and mention of the grant of the patent: **05.03.2025**
(21) Application number: 22201422.7
(22) Date of filing: 13.10.2022
(51) Int. Cl.: B65G 1/04

(54) **STORAGE SYSTEM WITH A MULTI-LEVEL STORAGE RACK**
LAGERSYSTEM MIT EINEM MEHREBENEN-LAGERGESTELL
SYSTÈME DE STOCKAGE AVEC UN RAYONNAGE DE STOCKAGE MULTINIVEAU

(43) Date of publication of application: 17.04.2024
(73) Proprietor: Dematic GmbH, 63150 Heusenstamm (DE)
(72) Inventor: YAMASHITA, Shin, 61440 Oberursel (DE)
(74) Representative: Moser Götze & Partner Patentanwälte mbB

(56) References cited:
- WO-A1-2017/015011
- DE-A1- 102020 205 747
- US-A1- 2014 124 462
- MA YUNFENG ET AL: "Travel Time Analysis of Split-platform Automated Storage and Retrieval Systems with Two Storage Classes", 2019 16TH INTERNATIONAL CONFERENCE ON SERVICE SYSTEMS AND SERVICE MANAGEMENT (ICSSSM), IEEE, 13 July 2019 (2019-07-13), pages 1 - 6, XP033652686, DOI: 10.1109/ICSSSM.2019.8887818

## Description

When picking or compiling orders from ready-picked transport units, such as articles or containers, it is necessary to provide the transport units, which are associated with a common order, in a sequenced or sorted manner. For this purpose, it is typical to temporarily store (buffer) the transport units of one order until all of the transport units required for the order are present. They are then passed collectively onto a collecting line, which guides them to the palletization area, picking station, goods issuing department, dispatch, or the like.

A high rack storage facility includes a feeding or storage-entry area, via which the goods are delivered and from which the racking serving units collect the goods for entry into storage, the so-called pre-zone. Similarly, a removal-from-storage area is required, at which after removal from storage the racking serving units place down the goods also assigned to the pre-zone. In the case of automatic picking warehouses, picking points are typically arranged in the pre-zone. The pre-zone is also where the goods are identified for the inventory management system or the material flow computer.

EP 1 964 792 B1 discloses a method for providing transport units from a storage facility in a desired sequence on at least one collecting line. Racking serving units in each storage-racking aisle, removal lifts and removal-feeding lines are controlled so as to be coordinated with one another and are loaded with goods such that they ultimately end up sorted on the collecting line or are delivered thereby. The control and coordination are therefore relatively complex and require technical outlay in the so-called pre-zone outside the actual racking.

EP 2 741 977 A1 discloses a method for providing transport units from a storage facility on at least one removal line, wherein the transport units are stored in a plurality of storage racks and storage rack levels, wherein interior storage racks are arranged in pairs adjoining one another and have a storage aisle on each side of the pair. At least one storage line and at least one removal line is provided. The transport units are placed into storage in, and removed from storage from, the storage rack via a storage and removal apparatus for each access aisle. For each access aisle, a storage and removal apparatus is provided. At least one removal lift is used to transfer the transport units to the removal line connected downstream thereof. A direct exchange of transport units takes place between two adjoining storage racks from one access aisle to an adjacent access aisle via transverse conveyance locations in the storage racks. The storage and removal apparatus moves the transport units in the transverse conveyance locations.

In such storage systems using so-called shuttles as storage and retrieval vehicles (see e. g. https://www.dematic.com/de-de/produkte/produktueberblick/lagertechnik/multishuttle/) it is possible to use the shuttles in two variants, a so-called "captive" and a so-called "roaming" arrangement. In the captive arrangement, the vehicles remain on their respective level, i. e. they are single-level-servicing-vehicles. In the roaming arrangement, the vehicle change levels according to requirement using a vehicle lift. In this variant the vehicles are multi-level-servicing-vehicles.

The captive variants have limited scalability in terms of number of shuttles vs. retrieval performance. Roaming may overcome this but goes hand in hand with the loss of performance due to decrease in number of shuttles and/or roaming lift retrieval performance restriction and also has downsides as consolidation and sequencing of retrieved items is poor.

DE 10 2009 032 406 A1 discloses a storage system in which shuttles may be moved between aisles by use of a dedicated rack servicing machine located as the back of the storage and able to carry a shuttle along the back of the storage crosswise.

DE 10 2020 205 747 A1 describes a method for storing and/or removing a storage item in or from a storage system, in particular a storage and removal system, having a rack storage with a plurality of storage racks spaced apart from one another, the storage racks having one or more storage locations for a storage item in a plurality of superimposed rack levels, and a rack aisle being formed in each case between adjacent storage racks, and a plurality of preferably bidirectional shuttles for transporting stored goods or containers for the stored goods from or to a storage location, wherein the shuttles for travelling on in the rack aisles, preferably by guide rails, in each case in a rack plane, is designed with structurally simple means with regard to flexible operation with high performance at favorable costs, that - for forming at least one captive aisle section or at least one captive shelf level - one or more shuttles is or are assigned to a single aisle section or a single shelf level in each case, and that - for forming at least one roaming area - one or more shuttles is or are assigned to a plurality of aisle sections or a plurality of shelf levels in each case.

US 2014/0124462 A1 discloses a multi-tier automated warehouse including first and second stacking racks having multiple tiers of shelves and being positioned facing one another in parallel; loading shuttles which are capable of horizontal travel between the stacking racks, and which carry out loading and unloading of cargo upon the shelves; and an elevator device for moving the loading shuttles to different tiers. The elevator device further includes masts which are positioned adjacent to the stacking racks; a shuttle elevator platform, which is positioned elevatable on the inner side of the masts, for elevating the loading shuttles; and cargo elevator platforms, which are positioned elevatable on the outer side of the masts, for elevating the cargo. In a state where the shuttle elevator platform is aligned with the cargo elevator platforms, it is possible for the loading shuttles on the shuttle elevator platforms to carry out cargo loading and unloading to the cargo elevator platforms, allowing handling cargo even while the loading shuttles are being elevated, obviating the need for wasteful waiting for cargo. As a result, it is possible to implement high performance. In this context, as illustrated in FIG. 4, the multi-tier racks may be divided into upper and lower parts, the waiting platforms being provided at each tier in the lower part and no waiting platforms being provided in the upper part, or vice versa. In the embodiment illustrated in FIG. 4, the upper part will correspond to the roaming-type automated storage/retrieval system according to the first embodiment, and the lower part will correspond to the captive-type automated storage/retrieval system in which a transferring shuttle is provided at each tier. This design is intended to make part of the automated storage/retrieval system the roaming-type and slow moving loads to be stored or retrieved in this part, restraining increase of cost, and to make the remaining part thereof almost captive-type or completely captive-type and to store so-called fast moving loads to be stored or retrieved in this remaining part, thus maximizing throughput performance. Accordingly, this design is advantageous for a high-rise automated storage/retrieval system and/or an automated storage/retrieval system that stores loads whose storage and retrieval frequencies are various.

Both DE 10 2020 205747 A1 and US 2014/124462 A1 disclose the preamble of claim 1.

Therefore, it is an objective of the invention to provide a storage system that combines the advantages of roaming shuttles and captive shuttles while roaming movement is minimized.

This objective is solved with the features of claim 1.

By providing a storage system for transport units in which the control is operable to control the storage and retrieval of transport units by controlling movement of the storage-entry and removal-from-storage apparatus and of the removal-from-storage lift and of the supply-to-storage lift and of the exchange systems and is operable to
- use at least one first storage rack level for dedicated storage of fast mover transport units, which is serviced by storage-entry and removal-from-storage apparatus present on each such level and each such level is directly connected to the at least one removal-from-storage lift and the at least one supply-to-storage lift, both removal-from-storage lift and supply-to-storage lift having interfacing rack conveyors arranged within the footprint of the racking;
and is operable to
- use at least one second storage rack level for dedicated storage of slow mover transport units or reserve transport units within the same aisle as the first storage rack level for dedicated storage of fast mover transport units, which is serviced by storage-entry and removal-from-storage apparatus that change levels via the exchange systems;
wherein the storage-entry and removal-from-storage apparatus of the first storage rack level for dedicated storage of fast mover transport units are controlled to have a high probability of being in a first storage rack level for dedicated storage of fast mover transport units and only leave such first storage rack level temporarily to enter second storage rack level for dedicated storage of slow mover transport units or reserve transport units to retrieve a slow mover transport units or reserve transport units and transport such to a first storage rack level via the exchange systems,

it is possible to satisfy high performance needs for the fast mover articles and provide scalability for the slow mover articles. As such a compromise between the two approaches, captive vs. roaming, has been achieved that provides a sweet spot especially for storage racks having many levels (i. e. high rise racks) with medium to high throughput.

In other words, and according to the invention, slow mover articles are stored in levels/aisles that are separate from levels/aisles for fast mover articles and the rack servicing devices are prioritized to the servicing of the fast movers. As such the inbound and outbound lifts are arranged in the respective fast mover aisles and are preferably decoupled from the rack servicing devices by buffer conveyors.

The rack servicing devices, e. g. shuttles, will stay on fast mover levels as a default position for most of its time and if a transport unit needs to be retrieved from a slow mover level, the shuttle "roams" into those levels (using the exchange system), picks the unit and returns to one of fast mover levels (does not have to be the same level) or dedicated slow mover buffer level(s).

The shuttle may then discharge the transport unit to buffering rack conveyor directly or temporarily buffer it in the rack. There is no limitation where fast mover and slow mover levels are located. However, slow mover levels are preferably located more toward upper levels of the rack to reduce captive lift travel distance for better throughout. The fast mover levels may be controlled to function as order consolidation buffers and sequencers. The exchange system, e. g. roaming lift, may also be used to retrieve the rack servicing devices, e. g. shuttles, for maintenance purposes.

In an embodiment, dedicated aisles with captive and roaming levels are i. e. storage-entry and removal-from-storage apparatus controlled to be present and not leave first storage rack level for dedicated storage of fast mover transport units of a full aisle and storage-entry and removal-from-storage apparatus controlled to change between storage rack levels of an aisle for dedicated storage of fast mover transport units.

In an embodiment it is possible to exchange units between aisle on the same level if the storage racks not arranged on the outside are each arranged in pairs adjoining one another and have a racking storage aisle on one side and exchange of transport units takes place between the center storage racking aisle and an adjacent wing storage racking aisle via transverse conveyance locations in the storage racks themselves, wherein the storage-entry and removal-from-storage apparatus moves the transport units in the transverse conveyance locations.

Preferably all storage-entry and removal-from-storage apparatus are of the single level service type and have a central load carrying area with adjacent telescopic load handling means, extendable to both sides of the apparatus and each having at least two load engaging organs for storage or retrieval.

The exchange systems for change of levels and/or aisles of the roaming storage-entry and removal-from-storage apparatus may consist of a at least one from the group consisting of:
- very narrow aisle forklift truck with lift platform adapted to carry a roaming storage-entry and removal-from-storage apparatus, optionally with attached storage and retrieval conveyors;
- At least one fixed level transfer bridge providing a transfer track from one aisle to the next;
- a robotic cable guided platform, e. g. as described in WO 2020 / 025 289 A1;
- roaming shuttle lift, e. g. as described in EP 2 754 625 A1, having a lift platform adapted to carry a roaming storage-entry and removal-from-storage apparatus and adjacent platforms for transport units;
- roaming lift having a lift platform adapted to carry a roaming storage-entry and removal-from-storage apparatus - e. g. as described in JP H 11278607A.

A robotic cable guided platform according to WO 2020 / 025 289 A1 comprises at least four cable tensioning means which are moveable and individually operable in a synchronized fashion by a control to a) move the load handling platform in the given workspace along the face of a storage racking by controlled movement of the at least four cable tensioning means along the face of the storage racking within the given workspace along guide tracks; and/or b) operate the at least four cable tensioning means in a controlled fashion to move the load handling platform in the given workspace along the face of a storage racking by controlled variation in length and tension of the cables.

A roaming shuttle lift according to EP 2 754 625 A1 comprises an elevator for moving a roaming storage-entry and removal-from-storage apparatus (transferring shuttle) to another tier, wherein the elevator comprises a shuttle elevating platform for lifting movement with a transferring shuttle placed thereon, the shuttle elevating platform being able to move upward and downward adjacent to the first and second multi-tier racks, and a first load elevating platform and a second load elevating platform for lifting movement with a load placed thereon, respectively, the first and second load elevating platforms being able to move upward and downward together with the shuttle elevating platform while being horizontally in alignment with the shuttle elevating platform.

A roaming storage-entry and removal-from-storage apparatus according to JP H 11278607A comprises an elevating carrying area that can be raised and lowered so that it can also face the storage shelves of different levels.

The exchange systems may be arranged at the end of the racks opposite the at least one removal-from-storage lift and the at least one supply-to-storage lift.

The exchange systems may however also be arranged at the same end of the racks as the at least one removal-from-storage lift and the at least one supply-to-storage lift. The exchange system and the lifts may then be nested to save space.

If at least two wing aisles with racks (i. e. those aisles neighboring a fast mover article aisle) are also connected to at least one additional removal-from-storage lift and the at least one supply-to-storage lift, it is possible to increase throughput for slow mover transport units.

A space saving arrangement allowing access by storage-entry and removal-from-storage apparatus to the whole length of the rack in an aisle may be provided by the interfacing rack conveyors being located adjacent the lift in the racking footprint such that they source and/or discharge the neighboring lifts to decouple their operation from that of the storage-entry and removal-from-storage apparatus.

The interfacing rack conveyors may be located adjacent the lift in the racking footprint such that they source and/or discharge the neighboring lifts to decouple their operation from that of the storage-entry and removal-from-storage apparatus.

The control can be operable to use the least one first storage rack level for temporarily buffering and/or consolidating slow mover transport units.

The control may be operable to use the dedicated levels for temporarily buffering and/or consolidating slow mover transport units.

The control may be operable to use the rack space opposite side of the removal-from-storage lift and of the supply-to-storage lift for temporarily buffering and/or consolidating slow mover transport units.

The control may be operable to control at least one storage-entry and removal-from-storage apparatus to be dedicated to slow mover transport units and slow mover transport units retrieved from the second storage rack level are buffered to dedicated level(s), preferably having a storage-entry feeding line and a removal-from storage feeding line, for consolidation of slow mover transport units.

The control may be operable (and implemented) to control the storage-entry and removal-from-storage apparatus of the first storage rack level for dedicated storage of fast mover transport units to have a high probability of greater than 80%, preferably greater than 90 %, but not limited to, of being in a first storage rack level for dedicated storage of fast mover transport units when compared to the system operation time. In other words, the storage-entry and removal-from-storage apparatus for the fast mover transport units spend most of their time in the respective levels when compared to the possible handling of slow mover transport units in other levels. This is set in relation to the overall operation time of the storage system.

Further details of the invention will now be explained with reference to the figures, in which:
Figure 1A, B show a schematic side view and birds view of a first embodiment of the invention in a high-rise rack with medium to high throughput with a mixture of hybrid operation aisles and captive lifts as well as roaming lifts and
Figure 2 shows a schematic birds view of a second embodiment of the invention in a low-rise rack with low to medium throughput with dedicated roaming and captive storage-entry and removal-from-storage apparatus operated aisles and an exchange system for the storage-entry and removal-from-storage apparatus.

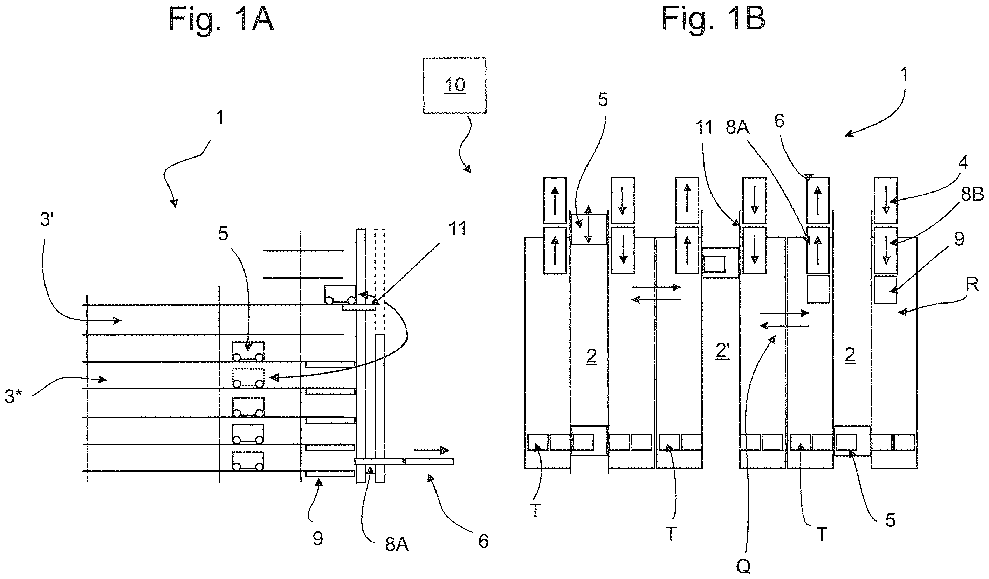

The storage system 1 for transport units T of figures 1A, B comprises a plurality of storage racks R with multiple storage rack levels 3 for storage of the transport units T.

The storage racks R not arranged on the outside of the storage are each arranged in pairs adjoining one another and have a storage racking aisle 2 on one side and exchange of transport units T takes place between the center storage racking aisle 2 and an adjacent wing storage racking aisle 2' via transverse conveyance locations Q in the storage racks themselves, wherein the storage-entry and removal-from-storage apparatus 5 moves the transport units T in the transverse conveyance locations Q.

Several storage-entry and removal-from-storage apparatus 5 travel along the storage racking aisle 2, 2' and have means for carrying transport units T and for displacing these to and from the storage racks R for placing the transport units T into storage and for removing from storage from the storage rack via a load handling means and for discharging to and supplying from at least one removal-from-storage lift 8A and at least one supply-to-storage lift 8B.

Between the rack R and the respective lifts 8A, 8B buffering rack conveyors 9 are placed, in certain levels only (see below), to decouple the load handling of the transport units T by the storage-entry and removal-from-storage apparatus 5 and the lifts 8A, 8B.

The storage-entry and removal-from-storage apparatus 5 are of the single level service type (so-called shuttles) and have a central load carrying area with adjacent telescopic load handling means, extendable to both sides of the apparatus and each having at least two load engaging organs for storage or retrieval of the transport units T by contacting the respective side walls thereof.

For connection to the rest of the warehouse at least one storage-entry feeding line 4 and at least one removal-from storage feeding line 6 are provided.

The at least one removal-from-storage lift 8A is used to transfer the transport units T to the removal-from-storage feeding line 6 and the at least one supply-to-storage lift 8B is used to transfer the transport units T from the at least one storage-entry feeding line 4. These are so-called captive lifts as they are used to transport units T only.

For vertical movement of the shuttle 5 roaming lifts are used. These exchange systems 11 allow for vertical change of aisle level by the storage-entry and removal-from-storage apparatus 5. In the present embodiment, they each comprise an elevator for moving a roaming shuttle to another level, wherein the elevator comprises a shuttle elevating platform for lifting movement with a transferring shuttle placed thereon, the shuttle elevating platform being able to move upward and downward adjacent to the first and second multi-level racks.

In other words, each aisle 2, 2' has both a transport unit lift and a shuttle lift. As such all aisles are hybrid operation aisles, in which depending on the level, slow movers and/or fast movers are stored.

The system is controlled by a control 10 for the control of the system and its components. The control is operable to control the storage and retrieval of transport units T by controlling movement of the shuttles 5 and of the removal-from-storage lift 8A and of the supply-to-storage lift 8B and of the exchange systems 11 (roaming lifts). The control 10 obviously also controls the buffer conveyors 9.

The control 10 is operable to use at least one first storage rack level 3* for dedicated storage of fast mover transport units FT, which is serviced by shuttle 5 present on each such level and each such level is directly connected to the at least one removal-from-storage lift 8A and the at least one supply-to-storage lift 8B, wherein both removal-from-storage lift 8A and supply-to-storage lift 8B having interfacing rack conveyors 9 arranged within the footprint of the racking.

The control 10 is also operable to use at least one second storage rack level 3' for dedicated storage of slow mover transport units ST or reserve transport units RT within the same aisle as the first storage rack level 3* for dedicated storage of fast mover transport units FT, which is serviced by roaming shuttles 5 that change levels via the roaming lift 11.

The shuttle 5 of the first storage rack level 3* for dedicated storage of fast mover transport units FT are controlled by the control 10 to have a high probability of being in a first storage rack level 3* for dedicated storage of fast mover transport units FT and to only leave such first storage rack level 3* temporarily to enter second storage rack level 3' for dedicated storage of slow mover transport units ST or reserve transport units RT to retrieve a slow mover transport units ST or reserve transport units RT and transport such to a first storage rack level 3* via the exchange systems.

The control 10 is programmed such that slow mover transport units ST are stored in levels/aisles that are separate from levels/aisles for fast mover transport units FT and the shuttles are prioritized to the servicing of the fast movers. As such the inbound and outbound lifts are arranged in the respective fast mover aisles and are preferably decoupled from the shuttles by the buffer conveyors.

The shuttles are controlled to stay on fast mover levels 3* as a default position for most of its time and if a transport unit needs to be retrieved from a slow mover level 3', the shuttle "roams" into those levels (using the exchange system), picks the unit and returns to one of fast mover levels (does not have to be the same level) or dedicated slow mover buffer level(s).

In other words, there are fast mover rack levels and slow mover rack levels within a same aisle. Rack conveyors 9 are present in every or selected levels depending on storage profile, i. e. slow mover levels do not usually have rack conveyor whilst fast mover levels have a pair of those. Shuttles 5 stay on fast mover levels as a default position for most of its time. When product is retrieved from slow mover's levels, shuttle "roams" into those levels, picks product and returns to one of fast mover level (does not have to be the same level).

The shuttle 5 may then discharge the transport unit T to a buffering rack conveyor 9 directly or temporarily buffer it in the rack R.

There is no limitation where fast mover and slow mover levels are located. However, slow mover levels are preferably located away from infeed/outfeed level typically, but not limited to, more toward upper levels of the rack to reduce captive lift travel distance for better throughout.

The fast mover levels 3* may be controlled to function as order consolidation buffers and sequencers. The exchange system, i. e. roaming lift, may also be used to retrieve the rack servicing devices, e. g. shuttles, for maintenance purposes.

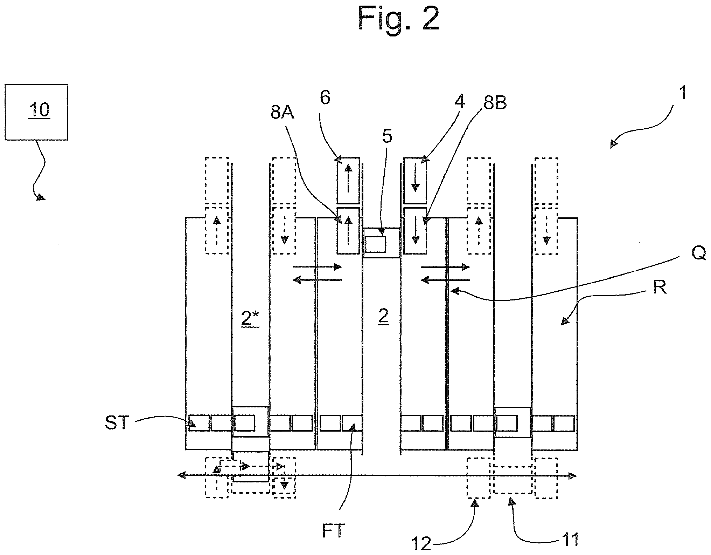

In the embodiment of figure 2, the storage has dedicated aisles 2 having captive shuttles 5 and roaming aisles 2* having roaming shuttles 5.

The captive aisles 2 have a lift arrangement with at least one removal-from-storage lift 8A used to transfer the transport units T to the removal-from-storage feeding line 6 and at least one supply-to-storage lift 8B is used to transfer the transport units T from the at least one storage-entry feeding line 4.

The roaming aisles 2* do not need such lifts but may have such implemented, which is why they are indicated with hashed lines.

The system is controlled by a control 10 for the control of the system and its components. The control is operable to control the storage and retrieval of transport units T by controlling movement of the shuttles 5 and of the removal-from-storage lift 8A and of the supply-to-storage lift 8B and of the exchange systems 11 (see below). Shuttles 5 are controlled by control 10 to be present and not leave first storage rack level for dedicated storage of fast mover transport units FT of a full aisle and shuttle 5 controlled to change between storage rack levels of an aisle for dedicated storage of fast mover transport units.

The storage racks R not arranged on the outside of the storage are each arranged in pairs adjoining one another and have a racking storage aisle 2 on one side and exchange of transport units T takes place between the center storage racking aisle 2 and an adjacent wing storage racking aisle 2' via transverse conveyance locations Q in the storage racks themselves, wherein the storage-entry and removal-from-storage apparatus 5 moves the transport units T in the transverse conveyance locations Q.

The roaming aisle also consists of a roaming lift or alternatively, in contrast to the embodiment of figure 1, the exchange system 11 for change of levels and/or aisles of the roaming shuttle 5 consists of very narrow aisle forklift truck 11 with lift platform adapted to carry a roaming shuttle 5 between aisles, optionally with attached storage and retrieval conveyors 12.

The exchange system 11 is arranged at the end 13 of the racks 6 opposite the least one removal-from-storage lift 8A and the at least one supply-to-storage lift 8B and travels along the length of the "backside" of the storage, as indicated by the arrows.

This embodiment functions as a basic installation that may be increased in view of storage and throughput needs.

The roaming shuttle aisles 2*act as slow mover/reserve storage.

Captive (or nearly captive) aisles 2 act as consolidation zones.

Access to all storage locations is possible via roaming shuttles and exchange in the transverse conveyance locations Q. These slots act as "buffers" so that throughput will be less sensitive to (frequency and realtime constraint of) level changing of shuttles.

## Claims

1. Storage system for transport units (T), with
- a plurality of storage racks (R) with multiple storage rack levels (3) for storage of the transport units (T);
- at least one storage-entry feeding line (4);
- at least one removal-from storage feeding line (6);
- at least one removal-from-storage lift (8A) is used to transfer the transport units (T) to the removal-from-storage feeding line (6);
- at least one supply-to-storage lift (8B) is used to transfer the transport units (T) from the at least one storage-entry feeding line (4);
- several storage-entry and removal-from-storage apparatus (5) that travel along a storage racking aisle (2) and have means for carrying transport units (T) and for displacing these to and from the storage racks (R) for placing the transport units (T) into storage in, and removing from storage from, the storage rack via a load handling means and for discharging to and supplying from the at least one removal-from-storage lift (8A) and the at least one supply-to-storage lift (8B);
- at least one exchange system (11) for vertical change of aisle level by the storage-entry and removal-from-storage apparatus (5); and
- at least one control (10) for the control of the system and its components; **characterized in that** the control is operable to control the storage and retrieval of transport units (T) by controlling movement of the storage-entry and removal-from-storage apparatus (5) and of the removal-from-storage lift (8A) and of the supply-to-storage lift (8B) and of the exchange systems and is operable to
- use at least one first storage rack level (3) for dedicated storage of fast mover transport units (FT), which is serviced by storage-entry and removal-from-storage apparatus (5) present on each such level and each such level is directly connected to the at least one removal-from-storage lift (8A) and the at least one supply-to-storage lift (8B), both removal-from-storage lift (8A) and supply-to-storage lift (8B) having interfacing rack conveyors (9) arranged within the footprint of the racking;
and is operable to
- use at least one second storage rack level (3) for dedicated storage of slow mover transport units (ST) or reserve transport units (RT) within the same aisle as the first storage rack level (3) for dedicated storage of fast mover transport units (FT), which is serviced by storage-entry and removal-from-storage apparatus (5) that change levels via the exchange systems;
wherein the storage-entry and removal-from-storage apparatus (5) of the first storage rack level (3) for dedicated storage of fast mover transport units (FT) are controlled to have a high probability of being in a first storage rack level (3) for dedicated storage of fast mover transport units (FT) and only leave such first storage rack level (3) temporarily to enter second storage rack level (3) for dedicated storage of slow mover transport units (ST) or reserve transport units (RT) to retrieve a slow mover transport units (ST) or reserve transport units (RT) and transport such to a first storage rack level (3) via the exchange systems.

2. Storage system according to claim 1, **characterized in that** the storage racks not arranged on the outside are each arranged in pairs adjoining one another and have a racking storage aisle (2) on one side and exchange of transport units (T) takes place between the center storage racking aisle (2) and an adjacent wing storage racking aisle (2') via transverse conveyance locations (Q) in the storage racks themselves, wherein the storage-entry and removal-from-storage apparatus (5) moves the transport units (T) in the transverse conveyance locations (Q).

3. Storage system according to claim 1 or 2 **characterized in that** the storage-entry and removal-from-storage apparatus (5) are of the single level service type and have a central load carrying area with adjacent telescopic load handling means, extendable to both sides of the apparatus and each having at least two load engaging organs for storage or retrieval.

4. Storage system according to any preceding claim **characterized in that** the exchange systems for change of levels and/or aisles of the roaming storage-entry and removal-from-storage apparatus (5) consist of a at least one from the group consisting of:
- very narrow aisle forklift truck with lift platform adapted to carry a roaming storage-entry and removal-from-storage apparatus (5), optionally with attached storage and retrieval conveyors;
- At least one fixed level transfer bridge providing a transfer track from one aisle to the next;
- a robotic cable guided platform;
- roaming shuttle lift having a lift platform adapted to carry a roaming storage-entry and removal-from-storage apparatus (5) and adjacent platforms for transport units (T)
- roaming lift having a lift platform adapted to carry a roaming storage-entry and removal-from-storage apparatus (5).

5. Storage system according to claim 4 **characterized in that** the exchange systems are arranged at the end of the racks opposite the least one removal-from-storage lift (8A) and the at least one supply-to-storage lift (8B).

6. Storage system according to claim 4 **characterized in that** the exchange systems are arranged at the same end of the racks as the at least one removal-from-storage lift (8A) and the at least one supply-to-storage lift (8B).

7. Storage system according to any preceding claim **characterized in that** the at least two wing aisles with racks are also connected to at least one additional removal-from-storage lift (8A) and the at least one supply-to-storage lift (8B).

8. Storage system according to any preceding claim **characterized in that** the interfacing rack conveyors (9) are located adjacent the lift in the racking footprint such that they source and/or discharge the neighboring lifts (8A, 8B) to decouple their operation from that of the storage-entry and removal-from-storage apparatus (5).

9. Storage system according to any preceding claim **characterized in that** the control is operable to use the least one first storage rack level (3) for temporarily buffering and/or consolidating slow mover transport units (ST).

10. Storage system according to any preceding claim **characterized in that** the control is operable to use the dedicated levels for temporarily buffering and/or consolidating slow mover transport units (ST).

11. Storage system according to any preceding claim **characterized in that** the control is operable to use the rack space opposite side of the removal-from-storage lift (8A) and of the supply-to-storage lift (8B) for temporarily buffering and/or consolidating slow mover transport units (ST).

12. Storage system according to any preceding claim **characterized in that** the control is operable to control at least one storage-entry and removal-from-storage apparatus (5) to be dedicated to slow mover transport units (ST) and slow mover transport units (ST) retrieved from the second storage rack level (3) are buffered to dedicated level(s), preferably having a storage-entry feeding line (4) and a removal-from storage feeding line (6), for consolidation of slow mover transport units (ST).

13. Storage system according to any preceding claim **characterized in that** the control is operable to control the storage-entry and removal-from-storage apparatus (5) of the first storage rack level (3) for dedicated storage of fast mover transport units (FT) to have a high probability of greater than 80%, preferably greater than 90 % of being in a first storage rack level (3) for dedicated storage of fast mover transport units (FT) when compared to the system operation time.

## Patentansprüche

1. Lagersystem für Transporteinheiten (T), mit
- einer Vielzahl von Lagerregalen (R) mit mehreren Lagerregalebenen (3) zur Lagerung der Transporteinheiten (T),
- mindestens einer Lagereingangsbeschickungslinie (4),
- mindestens einer Lagerentnahmebeschickungslinie (6),
- mindestens einem Lagerentnahmeaufzug (8A), der verwendet wird, um die Transporteinheiten (T) zu der Lagerentnahmebeschickungslinie (6) zu überführen,
- mindestens einem Lagerbeschickungsaufzug (8B), der verwendet wird, um die Transporteinheiten (T) von der mindestens einen Lagereingangsbeschickungslinie (4) zu überführen,
- mehreren Lagereingangs- und Lagerentnahmevorrichtungen (5), die sich entlang einer Lagerregalgasse (2) bewegen und Mittel zum Befördern von Transporteinheiten (T) und zum Versetzen dieser zu und von den Lagerregalen (R) aufweisen, zum Platzieren der Transporteinheiten (T) im Lager und Entnehmen aus dem Lager aus dem Lagerregal über ein Lasthandhabungsmittel und zum Abgeben an und Zuführen zu dem mindestens einen Lagerentnahmeaufzug (8A) und dem mindestens einen Lagerbeschickungsaufzug (8B),
- mindestens einem Austauschsystem (11) für einen vertikalen Wechsel einer Gassenebene durch die Lagereingangs- und Lagerentnahmevorrichtungen (5) und
- mindestens einer Steuerung (10) für die Steuerung des Systems und seiner Bestandteile, **dadurch gekennzeichnet, dass** die Steuerung funktionsfähig ist, um die Einlagerung und Entnahme von Transporteinheiten (T) durch Steuern der Bewegung der Lagereingangs- und Lagerentnahmevorrichtungen (5) und des Lagerentnahmeaufzugs (8A) und des Lagerbeschickungsaufzugs (8B) und der Austauschsysteme zu steuern, und funktionsfähig ist, um
- mindestens eine erste Lagerregalebene (3) zur dedizierten Lagerung von Schnelldreher-Transporteinheiten (FT) zu verwenden, die durch Lagereingangs- und Lagerentnahmevorrichtungen (5) bedient wird, die auf jeder solchen Ebene vorhanden sind, und wobei jede solche Ebene unmittelbar mit dem mindestens einen Lagerentnahmeaufzug (8A) und dem mindestens einen Lagerbeschickungsaufzug (8B) verbunden ist, wobei sowohl der Lagerentnahmeaufzug (8A) als auch der Lagerbeschickungsaufzug (8B) aneinander gekoppelte Regalförderer (9) aufweisen, die innerhalb der Aufstandsfläche des Regalsystems angeordnet sind,
und funktionsfähig ist, um
- mindestens eine zweite Lagerregalebene (3) zur dedizierten Lagerung von Langsamdreher-Transporteinheiten (ST) oder Reserve-Transporteinheiten (RT) innerhalb derselben Gasse wie die erste Lagerregalebene (3) zur dedizierten Lagerung von Schnelldreher-Transporteinheiten (FT) zu verwenden, die durch Lagereingangs- und Lagerentnahmevorrichtungen (5) bedient wird, die über die Austauschsysteme die Ebenen wechseln,
wobei die Lagereingangs- und Lagerentnahmevorrichtung (5) der ersten Lagerregalebene (3) zur dedizierten Lagerung von Schnelldreher-Transporteinheiten (FT) so gesteuert werden, dass sie eine hohe Wahrscheinlichkeit aufweisen, sich in einer ersten Lagerregalebene (3) zur dedizierten Lagerung von Schnelldreher-Transporteinheiten (FT) zu befinden, und eine solche erste Regallagerebene (3) nur zeitweilig verlassen, um zur dedizierten Lagerung von Langsamdreher-Transporteinheiten (ST) oder Reserve-Transporteinheiten (RT) in eine zweite Regallagerebene (3) einzutreten, um eine Langsamdreher- Transporteinheit (ST) oder Reserve-Transporteinheiten (RT) zu entnehmen und solche über die Austauschsysteme zu einer ersten Regallagerebene (3) zu transportieren.

2. Lagersystem nach Anspruch 1, **dadurch gekennzeichnet, dass** die Lagerregale, die nicht auf der Außenseite angeordnet sind, jeweils in Paaren angeordnet sind, die sich aneinander anschließen und eine Regallagergasse (2) auf einer Seite aufweisen, und ein Austausch von Transporteinheiten (T) zwischen der Mittel-Regallagergasse (2) und einer benachbarten Flügel-Regallagergasse (2') über Querförderpositionen (Q) in den Lagerregalen selbst erfolgt, wobei die Lagereingangs- und Lagerentnahmevorrichtung (5) die Transporteinheiten (T) in den Querförderpositionen (Q) bewegt.

3. Lagersystem nach Anspruch 1 oder 2, **dadurch gekennzeichnet, dass** die Lagereingangs- und Lagerentnahmevorrichtungen (5) von der Einzelebenen-Bedienungsart sind und einen mittigen Last tragenden Bereich aufweisen, mit benachbarten teleskopartigen Lasthandhabungsmitteln, die zu beiden Seiten der Vorrichtung ausfahrbar sind und jeweils mindestens zwei Lasteingriffsorgane für Einlagerung oder Entnahme aufweisen.

4. Lagersystem nach einem der vorhergehenden Ansprüche, **dadurch gekennzeichnet, dass** die Austauschsysteme zum Wechsel von Ebenen und/oder Gassen der umherwandernden Lagereingangs- und Lagerentnahmevorrichtungen (5) aus mindestens einem aus der Gruppe bestehen, die aus Folgendem besteht:
- einem sehr schmalen Gassengabelstapler mit einer Hebeplattform, die angepasst ist, um eine umherwandernde Lagereingangs- und Lagerentnahmevorrichtung (5) zu befördern, wahlweise mit angeschlossenen Einlagerungs- und Entnahmeförderern,
- mindestens einer Festebenen-Verschiebebrücke, die eine Überführungsbahn von einer Gasse zu der nächsten bereitstellt,
- eine seilgeführte Roboterplattform,
- einen umherwandernden Pendelaufzug, der eine Hebeplattform aufweist, die angepasst ist, um eine umherwandernde Lagereingangs- und Lagerentnahmevorrichtung (5) und benachbarte Plattformen für Transporteinheiten (T) zu befördern,
- einen umherwandernden Aufzug, der eine Hebeplattform aufweist, die angepasst ist, um eine umherwandernde Lagereingangs- und Lagerentnahmevorrichtung (5) zu befördern.

5. Lagersystem nach Anspruch 4, **dadurch gekennzeichnet, dass** die Austauschsysteme an dem Ende der Regale, entgegengesetzt zu dem mindestens einen Lagerentnahmeaufzug (8A) und dem mindestens einen Lagerbeschickungsaufzug (8B), angeordnet sind.

6. Lagersystem nach Anspruch 4, **dadurch gekennzeichnet, dass** die Austauschsysteme an demselben Ende der Regale wie der mindestens eine Lagerentnahmeaufzug (8A) und der mindestens eine Lagerbeschickungsaufzug (8B) angeordnet sind.

7. Lagersystem nach einem der vorhergehenden Ansprüche, **dadurch gekennzeichnet, dass** die mindestens zwei Flügelgassen mit Regalen ebenfalls mit mindestens einem zusätzlichen Lagerentnahmeaufzug (8A) und dem mindestens einen Lagerbeschickungsaufzug (8B) verbunden sind.

8. Lagersystem nach einem der vorhergehenden Ansprüche, **dadurch gekennzeichnet, dass** die aneinander gekoppelten Regalförderer (9) derart angrenzend an den Aufzug in der Lagersystem-Aufstandsfläche angeordnet sind, dass sie die benachbarten Aufzüge (8A, 8B) beschicken und/oder entladen, um ihren Betrieb von demjenigen der Lagereingangs- und Lagerentnahmevorrichtungen (5) zu entkoppeln.

9. Lagersystem nach einem der vorhergehenden Ansprüche, **dadurch gekennzeichnet, dass** die Steuerung funktionsfähig ist, um die mindestens eine erste Lagerregalebene (3) zum zeitweiligen Puffern und/oder Zusammenführen von Langsamdreher-Transporteinheiten (ST) zu verwenden.

10. Lagersystem nach einem der vorhergehenden Ansprüche, **dadurch gekennzeichnet, dass** die Steuerung funktionsfähig ist, um die dedizierten Ebenen zum zeitweiligen Puffern und/oder Zusammenführen von Langsamdreher-Transporteinheiten (ST) zu verwenden.

11. Lagersystem nach einem der vorhergehenden Ansprüche, **dadurch gekennzeichnet, dass** die Steuerung funktionsfähig ist, um die dem Regalraum gegenüberliegende Seite des Lagerentnahmeaufzugs (8A) und des Lagerbeschickungsaufzugs (8B) zum zeitweiligen Puffern und/oder Zusammenführen von Langsamdreher-Transporteinheiten (ST) zu verwenden.

12. Lagersystem nach einem der vorhergehenden Ansprüche, **dadurch gekennzeichnet, dass** die Steuerung funktionsfähig ist, um die mindestens eine Lagereingangs- und Lagerentnahmevorrichtung (5) so zu steuern, dass sie für Langsamdreher-Transporteinheiten (ST) dediziert ist, und Langsamdreher-Transporteinheiten (ST), die von der zweiten Lagerregalebene (3) entnommen werden, in (einer) dedizierten Ebene(n), die vorzugsweise eine Lagereingangsbeschickungslinie (4) und eine Lagerentnahmebeschickungslinie (6) aufweist/aufweisen, zur Zusammenführung von Langsamdreher-Transporteinheiten (ST) gepuffert werden.

13. Lagersystem nach einem der vorhergehenden Ansprüche, **dadurch gekennzeichnet, dass** die Steuerung funktionsfähig ist, um die Lagereingangs- und Lagerentnahmevorrichtung (5) der ersten Lagerregalebene (3) zur dedizierten Lagerung von Schnelldreher-Transporteinheiten (FT) so zu steuern, dass sie, verglichen mit der Systembetriebszeit, eine hohe Wahrscheinlichkeit von mehr als 80 %, vorzugsweise mehr als 90 %, aufweist, sich in einer ersten Lagerregalebene (3) zur dedizierten Lagerung von Schnelldreher-Transporteinheiten (FT) zu befinden.

## Revendications

1. Système de stockage pour des unités de transport (T) ayant:
- un ensemble de rayonnage de stockage (R) avec des niveaux de rayonnage de stockage multiples (3) pour stocker des unités de transport (T),
- au moins une ligne d'alimentation d'entrée de stockage (4),
- au moins une ligne de sortie de stockage (6),
- au moins un élévateur de sortie de stockage (8A) pour transférer les unités de transport (T) vers la ligne de sortie de stockage (6),
- au moins un élévateur d'entrée de stockage (8B) utilisé pour transférer des unités de transport (T) d'au moins une ligne d'alimentation d'entrée de stockage (4),
- plusieurs appareils de stockage d'entrée et de sortie (5) se déplaçant le long d'une allée de rayonnage de stockage (2) et ayant des moyens pour porter des unités de transport (T) et pour les déplacer vers et à partir des rayonnages de stockage (R) pour mettre les unités de transport (T) dans les stockages ou de les enlever des stockages, du rayonnage de stockage par un moyen de traitement de charge et pour décharger vers et fournir à partir d'au moins un élévateur de sortie de stockage (8A) et au moins un élévateur d'entrée de stockage (8B),
- au moins un système d'échange (11) pour changer verticalement de niveau d'allée par l'appareil d'entrée de stockage et de sortie de stockage (5), et
- au moins une commande (10) pour commander le système et ses composants, système **caractérisé en ce que** la commande fonctionne pour commander le stockage et la récupération des unités de transport (T) en commandant le mouvement de l'appareil d'entrée et de sortie de stockage (5) et de l'élévateur de sortie de stockage (8A) et l'élévateur d'entrée de stockage (8B) et du système d'échange, et fonctionnant pour:
- utiliser au moins un premier niveau de rayonnage de stockage (3) pour le stockage dédié d'unités de transport rapide (FT) qui est desservi par l'appareil d'entrée de stockage et de sortie de stockage (5) présent à chaque tel niveau et chaque tel niveau est relié directement à au moins un élévateur de sortie de stockage (8A) et à au moins un élévateur d'entrée de stockage (8B), à la fois l'élévateur de sortie de stockage (8A) et celui d'entrée de stockage (8B) ayant des convoyeurs de rayonnage (9), en interface, organisés dans l'empreinte du rayonnage, et fonctionnant pour :
- à l'usage d'au moins un second niveau de rayonnage de stockage (3) pour le stockage dédié d'unités de transport lent (ST) ou d'unités de transport de réserve (RT) dans la même allée que le premier niveau de rayonnage de stockage (3) pour le stockage dédié des unités de transport rapide (FT) qui est desservi par l'appareil d'entrée de stockage et de sortie de stockage (5) qui modifie les niveaux par les systèmes d'échange,
l'appareil d'entrée de stockage et de récupération de stockage (5) du premier niveau de rayonnage de stockage (3) pour le stockage dédié d'unités de transport rapide (FT) sont commandés pour avoir une forte probabilité d'être dans un premier niveau de rayonnage de stockage (3) pour le stockage dédié des unités de transport rapide (FT) et seulement quitter ce premier niveau de rayonnage de stockage (3) temporairement pour entrer dans le second rayonnage de stockage (3) pour le stockage dédié d'unités de transport lent (ST) ou d'unité de transport de réserve (RT), pour récupérer des unités de transport lent (ST) et/ou des unités de transport de réserve (RT), et transporter à un premier niveau de rayonnage de stockage (3) par les systèmes d'échange.

2. Système de stockage selon la revendication 1, **caractérisé en ce que** les rayonnages de stockages non organisés sur l'extérieur sont organisés chacun par paire adjacente l'une à l'autre et ayant une allée de stockage de rayonnage (2) sur un côté et l'échange d'unités de transport (T) se fait entre l'allée de rangement de stockage central (2) et l'allée (2') de rangement de stockage voisine par des emplacements de transfert (Q) dans les rayonnages de stockage eux-mêmes, l'appareil d'entrée de stockage et de sortie de stockage (5) déplace les unités de transport (T) dans les emplacements de transport transversaux (Q).

3. Système de stockage selon la revendication 1 ou 2, **caractérisé en ce que** les appareils d'entrée de stockage et de sortie de stockage (5) sont deux types de dessertes de niveau simple et ont une zone de transport de charge centrale avec des moyens de traitement de charge, télescopiques adjacents, qui s'étendent des deux côtés de l'appareil et ont chacun au moins deux organes d'engagements de charge pour le stockage ou la récupération.

4. Système de stockage selon l'une quelconque des revendications précédentes, **caractérisé en ce que** les systèmes d'échange pour changer les niveaux et/ou les allées de l'appareil de rangement d'entrée de stockage et de sortie de stockage (5) consistent en au moins l'un des groupes suivants:
- un chariot à fourche, d'allée très étroite, avec une plateforme de soulèvement pour porter un appareil de rangement de stockage d'entrée et de sortie de stockage (5), en option avec des convoyeurs de stockage et de sortie, attachés,
- au moins un pont de transfert de niveau fixe, réalisant un rayonnage de transfert d'une allée à la suivante,
- une plateforme robotique guidée par câble,
- un élévateur de rangement de navette ayant une plateforme d'élévateur pour porter une entrée de stockage de dégagement et un appareil d'enlèvement de stockage (5) et qui est adjacent aux plateformes de l'unité de transport (T),
- un élévateur de rayonnage ayant une plateforme d'élévateur pour porter un appareil pour l'entrée de stockage et la sortie de stockage (5).

5. Système de stockage selon la revendication 4, **caractérisé en ce que** les systèmes d'échange sont prévus à une extrémité des rayonnages à l'opposé d'au moins un élévateur de sortie de stockage (8A) et au moins un élévateur d'entrée de stockage (8B).

6. Système de stockage selon la revendication 4, **caractérisé en ce que** les systèmes d'échange sont organisés à la même extrémité des rayonnages qu'au moins un élévateur de sortie de stockage (8A) et d'au moins un élévateur d'entrée de stockage (8B).

7. Système de stockage selon l'une quelconque des revendications précédentes, **caractérisé en ce que** au moins deux allées latérales avec des rayonnages sont reliés à au moins un élévateur additionnel de sortie de stockage (8A) et à au moins un élévateur d'entrée de stockage (8B).

8. Système de stockage selon l'une quelconque des revendications précédentes, **caractérisé en ce que** les convoyeurs de rayonnage d'interface (9) sont situés au voisinage de l'empreinte de rayonnage de façon qu'ils puissent fournir et/ou décharger les élévateurs voisins (8A, 8B) pour découpler leur fonctionnement par rapport à l'appareil d'entrée de stockage et de sortie de stockage (5).

9. Système de stockage selon l'une quelconque des revendications précédentes, **caractérisé en ce que** la commande fonctionne pour utiliser au moins le premier niveau de rayonnage de stockage (3) pour absorber temporairement et/ou consolider les unités de transport lent (ST).

10. Système de stockage selon l'une quelconque des revendications précédentes, **caractérisé en ce que** la commande fonctionne pour utiliser les niveaux dédiés pour recevoir temporairement et/ou consolider les unités de transport lent (ST).

11. Système de stockage selon l'une quelconque des revendications précédentes, **caractérisé en ce que** la commande fonctionne pour utiliser l'espace de rayonnage sur le côté opposé de l'élévateur de sortie du stockage (8A) et l'élévateur d'entrée de stockage (8B) à une application pour absorber temporairement et/ou consolider les unités de transport lent (ST).

12. Système de stockage selon l'une quelconque des revendications précédentes, **caractérisé en ce que** la commande fonctionne pour commander au moins un appareil d'entrée de stockage et de sortie de stockage (5) pour être dédié à des unités de transport lent (ST) et les unités de transport lent (ST) récupérées du second niveau de stockage (3) sont tamponnés à des niveaux dédiés, ayant de préférence une ligne d'entrée de stockage (4) et une ligne de sortie de stockage (6), pour consolider les unités de transport lent (ST).

13. Système de stockage selon l'une quelconque des revendications précédentes, **caractérisé en ce que** la commande fonctionne pour commander l'appareil d'entrée de stockage et de sortie de stockage (5) du premier niveau de rayonnage de stockage (3) pour le stockage dédié d'au moins des unités de transport rapide (FT) qui ont une forte probabilité supérieure à 80%, de préférence supérieure à 90% d'être dans un premier niveau de rayonnage de stockage (3) pour le stockage dédié des unités de transport rapide (FT) par comparaison avec le temps de fonctionnement du système.
